# EUROPEAN PATENT APPLICATION

(11) **EP 4 661 192 A1**
(43) Date of publication of application: **10.12.2025**
(21) Application number: 24749921.3
(22) Date of filing: 15.01.2024
(51) Int. Cl.: H01M 50/483, H01M 50/107, H01M 50/152, H01M 50/167, H01M 50/474, H01M 50/477

(54) **CYLINDRICAL BATTERY**

(30) Priority: 31.01.2023 JP 2023012667
(71) Applicant: Panasonic Energy Co., Ltd., Osaka 570-8511 (JP)
(72) Inventor: YOSHIDA Masayoshi, Osaka 571-0057 (JP)
(74) Representative: Eisenführ Speiser
(86) International application number: PCT/JP2024/000799
(87) International publication number: WO 2024/161967

(57) **Abstract**

This cylindrical battery (10) comprises: a bottomed external can (16) that accommodates an electrode body (14), the external can (16) having a cylindrical part (39) that includes a shoulder part (29) extending radially inward at one axial-direction end part and a grooved part (22) recessed radially inward over the entire circumferential-direction periphery, and a bottom part (31) that blocks an opening in the other axial-direction side of the cylindrical part (39); a sealing body (17) that blocks an open section of the external can (16); an upper insulation plate (18) that is positioned between the grooved part (22) and the electrode body (14); and a metal sheet (40), at least part of which is interposed between the grooved part (22) and the insulation plate (18).

## Description

### TECHNICAL FIELD

The present disclosure relates to a cylindrical battery.

### BACKGROUND ART

A cylindrical battery includes: an electrode assembly; a bottomed cylindrical exterior can that accommodates the electrode assembly; a sealing assembly that blocks an opening portion of the exterior can; and a gasket clamped by the exterior can and the sealing assembly (for example, see Patent Literature 1). The cylindrical portion of the exterior can includes a grooved portion, and an annular shoulder portion. The grooved portion is formed by depressing part of the cylindrical portion inward in the radial direction. The shoulder portion is formed when an end portion of the cylindrical portion closer to the opening is bent inward and swagged to a peripheral edge portion of the sealing assembly, and extends inward in the radial direction. The sealing assembly is clamped by the shoulder portion and the grooved portion via the gasket by swagging, thus being fixed to the exterior can.

### CITATION LIST

### PATENT LITERATURE

PATENT LITERATURE 1: Japanese Unexamined Patent Application Publication No. Hei 09-274923

### SUMMARY

In the cylindrical battery, a high-temperature gas is sometimes released through the opposite end surfaces of the electrode assembly in the axial direction during abnormal heat generation. In this case, the gas released from the end surface of the electrode assembly on the can bottom side toward the can bottom flows toward the sealing assembly through a hollow portion of the electrode assembly, and further flows toward the sealing assembly through an outer-peripheral surface of the electrode assembly and an inner-peripheral surface of the exterior can.

In such a backdrop, the gas that is flowing toward the sealing assembly through the gap between the outer-peripheral surface of the electrode assembly and the inner-peripheral surface of the exterior can, and microparticles that are contents in the battery and are flowing along with the gas directly collide with a surface of the grooved portion on the can bottom side in the axial direction. Consequently, there is a possibility that in case the cylindrical battery generates abnormal heat, a fracture occurs around a part of the grooved portion around the can bottom in the axial direction. Accordingly, the present disclosure has an advantage to provide a cylindrical battery that is resistant to the occurrence of a fracture at the part of the grooved portion around the can bottom in the axial direction even in case of abnormal heat generation.

To solve the problem described above, a cylindrical battery according to the present disclosure comprises: an electrode assembly that includes a positive electrode and a negative electrode that are wound with a separator intervening therebetween; a bottomed cylindrical exterior can that includes: a cylindrical portion that includes a shoulder portion extending inward in a radial direction at an end portion on one side in an axial direction, and a grooved portion depressed inward in the radial direction over an entire periphery in a circumferential direction; and a bottom portion that blocks an opening on another side in the axial direction at the cylindrical portion, the bottomed cylindrical exterior can accommodating the electrode assembly; a sealing assembly that blocks an opening portion of the exterior can; an insulating plate disposed between the grooved portion and the electrode assembly; and a metal plate of which at least a part intervenes between the grooved portion and the insulating plate.

According to the cylindrical battery in the present disclosure, even in case of abnormal heat generation, the part of the grooved portion around the can bottom in the axial direction is resistant to the occurrence of a fracture.

### BRIEF DESCRIPTION OF DRAWING

FIG. 1 is a sectional view of a cylindrical battery in the axial direction according to one embodiment of the present disclosure.
FIG. 2 is an expanded sectional view around a metal plate in FIG. 1.
FIG. 3 is a perspective view of the metal plate.

### DESCRIPTION OF EMBODIMENTS

Referring to the drawings, an embodiment of a cylindrical battery according to the present disclosure is described below in detail. Note that the cylindrical battery in the present disclosure may be a primary battery or a secondary battery. It may be a battery that uses aqueous electrolyte, or a battery that uses non-aqueous electrolyte. In the following, a non-aqueous electrolyte secondary battery (lithium-ion battery) that uses non-aqueous electrolyte is described below as a cylindrical battery 10 that is an embodiment. However, the cylindrical battery in the present disclosure is not limited to this. The electrolyte may be aqueous electrolyte.

It is originally assumed that the characteristic portions of the embodiment and modified examples described below are combined as appropriate, and a new embodiment is constructed. In the following embodiment, the same configuration is assigned the same symbol in the diagram, and redundant description is omitted. The plurality of drawings include schematic diagrams. Among different diagrams, the ratios of longitudinal, lateral, and height dimensions and the like of the members do not necessarily match. In the present Description, the sense of the axial direction (height direction) of the cylindrical battery 10 where the sealing assembly 17 is present is defined as "upper", and the sense of the axial direction where the bottom portion 31 is present is defined as "lower". Among the configuration elements described below, configuration elements that are not described in an independent claim representing the highest-level concept are arbitrary configuration elements, and are not necessary configuration elements.

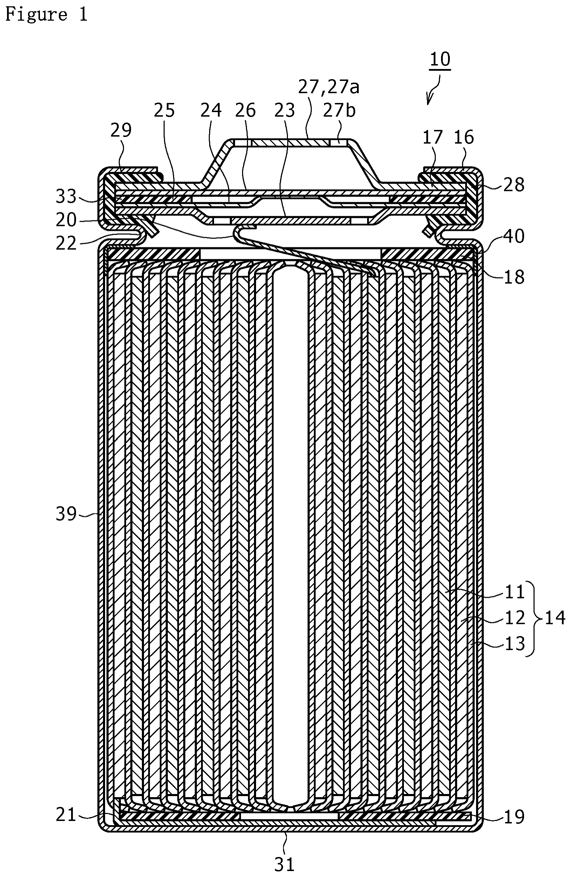

FIG. 1 is a sectional view of a cylindrical battery 10 in the axial direction according to one embodiment of the present disclosure. As shown in FIG. 1, the cylindrical battery 10 includes: an electrode assembly 14; a bottomed cylindrical exterior can 16 that accommodates the electrode assembly 14; a sealing assembly 17 that blocks an opening portion of the exterior can 16; and an annular metal plate 40. The exterior can 16 houses non-aqueous electrolyte along with the electrode assembly 14. The exterior can 16 includes, at its upper end portion, a shoulder portion 29 that is bent inward in the radial direction and extends inward. The exterior can 16 includes a grooved portion 22 formed in a side wall, and the sealing assembly 17 is supported by the grooved portion 22 and blocks an opening portion of the exterior can 16.

The cylindrical battery 10 further comprises a gasket 28 that intervenes between the exterior can 16 and the sealing assembly 17. The gasket 28 is an annular plastic member attached to an outer peripheral portion of the sealing assembly 17, and insulates the sealing assembly 17 from the exterior can 16. The gasket 28 blocks the gap between the exterior can 16 and the sealing assembly 17, and seals the inside of the battery. The gasket 28 is made of, for example, polyolefin.

The non-aqueous electrolyte contains a non-aqueous solvent, and electrolyte salt dissolved in the non-aqueous solvent. The non-aqueous solvent may be, for example, any of esters, ethers, nitriles, or amides, a mixed solvent of two or more of them, or the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF₆. Note that the non-aqueous electrolyte is not limited to liquid electrolyte, and may be solid electrolyte instead.

The electrode assembly 14 has a wound structure which includes a positive electrode 11, a negative electrode 12, and a separator 13, and in which the positive electrode 11 and the negative electrode 12 are spirally wound with the separator 13 intervening therebetween. The positive electrode 11, the negative electrode 12, and the separator 13 are strip-shaped elongated bodies, and are spirally wound, thus being alternately stacked in the radial direction of the electrode assembly 14. The negative electrode 12 is formed to have a dimension one size larger than the positive electrode 11 in order to prevent lithium from depositing. That is, the negative electrode 12 is formed to be longer in the longitudinal direction and the width direction than the positive electrode 11. The separator 13 is formed to have a dimension at least one size larger than the positive electrode 11. For example, two separators 13 are disposed so as to sandwich the positive electrode 11.

A positive electrode lead 20 and a negative electrode lead 21 are connected to the electrode assembly 14. The positive electrode lead 20 electrically connects the positive electrode 11 and the sealing assembly 17 to each other. The negative electrode lead 21 electrically connects the negative electrode 12 and the bottom portion 31 of the exterior can 16 to each other. In the diagram shown in FIG. 1, the positive electrode lead 20 extends toward the sealing assembly 17 through the opening portion of the upper insulating plate 18, and the negative electrode lead 21 extends toward the bottom portion 31 of the exterior can 16 through the outside of the lower insulating plate 19.

The positive electrode 11 includes a positive electrode core, and a positive electrode composite agent layer formed on at least one surface of the positive electrode core. The positive electrode core may be made of metal foil that is stable in the potential range of the positive electrode 11, such as of aluminum or an aluminum alloy, a film on which the metal is disposed as the surface layer, or the like. Preferably, the positive electrode composite agent layer contains: a positive-electrode active material; a conductive agent, such as acetylene black; and a binding agent, such as polyvinylidene fluoride (PVdF), and is formed on each of the opposite surfaces of the positive electrode core. For example, a lithium transition metal composite oxide that contains Ni, Co, Mn, Al or the like is used as the positive-electrode active material. Preferably, while the positive electrode lead 20 is connected to the positive electrode 11, the positive electrode lead 20 is directly joined to the positive electrode core by ultrasonic welding or the like.

The negative electrode 12 includes a negative electrode core, and a negative electrode composite agent layer formed on at least one surface of the negative electrode core. The negative electrode core may be made of, for example, metal foil that is stable in the potential range of the negative electrode 12, such as of copper or a copper alloy, a film on which the metal is disposed as the surface layer, or the like. Preferably, the negative electrode composite agent layer contains a negative-electrode active material, and a binding agent such as styrene-butadiene rubber (SBR) or PVdF, and is formed on each of the opposite surfaces of the negative electrode core. For example, graphite, a silicon-containing compound or the like is used as the negative-electrode active material. Preferably, the negative electrode lead 21 is directly connected to the negative electrode core by ultrasonic welding or the like. Note that the negative electrode core may be in contact with the inner surface of the exterior can 16, thus electrically connecting the negative electrode 12 and the exterior can 16 to each other.

The exterior can 16 is typically made of metal, with iron as the principal component, for example, a material made by plating iron with nickel, but may be made of metal, with aluminum or the like as the principal component, instead. The exterior can 16 includes the cylindrical portion 39 and the bottom portion 31. The cylindrical portion 39 includes the annular grooved portion 22 and the annular shoulder portion 29. The grooved portion 22 is formed by depressing part of the cylindrical portion 39 inward in the radial direction by a spinning process. The shoulder portion 29 is formed when an upper end portion (an end portion on one side in the axial direction) of the cylindrical portion 39 is bent inward in the radial direction and swagged to a peripheral edge portion 33 of the sealing assembly 17, and extends inward in the radial direction at the upper end portion of the cylindrical portion 39.

The metal plate 40 is disposed in the exterior can 16 so as to at least partially intervene between the grooved portion 22 and the upper insulating plate 18. The metal plate 40 is made of a metal material, for example, nickel, a nickel-plated steel plate or the like. The thickness of the metal plate 40 is, for example, greater than or equal to 0.05 mm and less than or equal to 0.1 mm.

The sealing assembly 17 is clamped by the shoulder portion 29 and the grooved portion 22 via the gasket 28 by swagging, thus being fixed to the exterior can 16. The grooved portion 22 is formed at a position apart from the upper end of the exterior can 16 by a predetermined length. The predetermined length is, for example, a length corresponding to what is greater than or equal to 1% and less than or equal to 20% of the length of the exterior can 16 in the axial direction. The gasket 28 is strongly compressed by the shoulder portion 29, and partially protrudes inward in the radial direction between the shoulder portion 29 and the sealing assembly 17.

The sealing assembly 17 has a structure that includes a terminal plate 23, a lower vent member 24, an insulating plate 25, an upper vent member 26, and a sealing plate 27 stacked in this order from the electrode assembly 14 side. The members constituting the sealing assembly 17 each have, for example, a disk shape or a ring shape. Each of the members except the insulating plate 25 are electrically connected to each other. The sealing plate 27 has a convex shape where a center portion in the radial direction protrudes outward. The projection 27a of the sealing plate 27 includes: an inclined surface portion formed annularly; and a flat top surface portion surrounded by the inclined surface portion. One or more vent holes 27b are formed in the top surface portion.

The lower vent member 24, the insulating plate 25, and the upper vent member 26 constitute a current blocking mechanism. The lower vent member 24 and the upper vent member 26 are connected to each other at their center portions, and the insulating plate 25 intervenes between their peripheral edge portions. Possible increase in the internal pressure due to occurrence of an abnormality in the cylindrical battery 10 causes the lower vent member 24 to be deformed to push up the upper vent member 26 toward the sealing plate 27 and is broken, thereby breaking the current path between the lower vent member 24 and the upper vent member 26. Further increase in the internal pressure breaks the upper vent member 26, and gas is exhausted through the vent holes 27b of the sealing plate 27.

In the present embodiment, the positive electrode lead 20 is connected to the lower surface of the terminal plate 23 by welding, ultrasonic welding or the like, and the sealing plate 27 that is a top plate of the sealing assembly 17 and is electrically connected to the terminal plate 23 serves as a positive electrode terminal. The negative electrode lead 21 is connected to a bottom portion 31 inner surface of the exterior can 16 by welding, ultrasonic welding or the like, and the exterior can 16 serves as a negative electrode terminal.

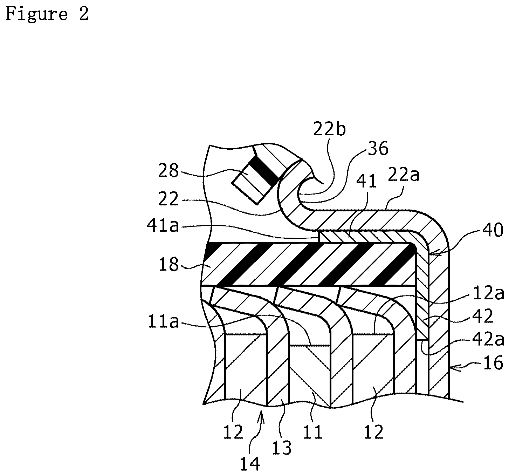

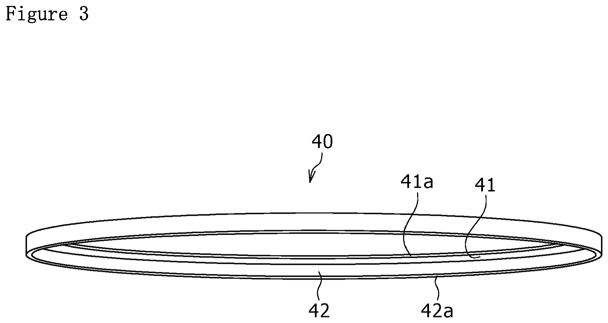

Further referring to FIGS. 2 and 3, the structure of the metal plate 40, and the arrangement position of the metal plate 40 in the exterior can 16 are described in detail below. FIG. 2 is an expanded sectional view around the metal plate 40 in FIG. 1. FIG. 3 is a perspective view of the metal plate 40. As shown in FIGS. 2 and 3, the metal plate 40 includes: an annular flat plate portion 41; and a cylindrical portion 42 that extends from the outer peripheral edge of the flat plate portion 41 toward the bottom portion 31 along the inner-peripheral surface of the exterior can 16.

An inner end 41a of the flat plate portion 41 on the inner side in the radial direction is positioned more outward in the radial direction than an inner end 22b positioned at the innermost periphery of the annular groove 36 defined by the grooved portion 22. Part of the cylindrical portion 42 intervenes between the electrode assembly 14 and the exterior can 16. In the axial direction, a lower end (an end of the cylindrical portion 42 closer to the bottom portion 31) 42a of the cylindrical portion 42 is positioned lower (closer to the bottom portion 31) than the upper end (an end of the negative electrode 12 closer to the sealing assembly 17) 12a of the negative electrode 12.

According to the cylindrical battery 10, at least part of the metal plate 40 intervenes between the grooved portion 22 and the upper insulating plate 18. Consequently, at least part of the groove lower portion 22a of the grooved portion 22 that is positioned on the lower side of the annular groove 36 can be covered with the metal plate 40.

Consequently, a high-temperature gas that is released from the lower end surface of the electrode assembly 14 in case of abnormal heat generation in the cylindrical battery 10 and flows upward through the gap between the exterior can 16 and the electrode assembly 14 can be prevented from directly colliding with at least part of the groove lower portion 22a. As a result, the covered portion can be prevented from being damaged, and the groove lower portion 22a can be prevented from being fractured accordingly.

In the conventional cylindrical battery, the corner portion positioned on the outer peripheral side of the groove lower portion is a site where the flow of the high-temperature gas changes from the upper side in the axial direction to the inner side in the radial direction and is a site where the high-temperature gas directly collides from the lower side in the axial direction. Accordingly, there is a possibility that a fracture easily occurs. Unlike this, in the cylindrical battery 10, the metal plate 40 comprises the cylindrical portion 42 that extends along the inner-peripheral surface of the exterior can 16. Accordingly, the corner portion positioned on the outer peripheral side of the groove lower portion 22a can be covered with the metal plate 40. Consequently, the corner portion can be effectively prevented from being fractured in case of abnormal heat generation in the cylindrical battery 10. The side wall portion of the exterior can 16 covered with the cylindrical portion 42 can be prevented from being fractured.

The lower end 42a of the cylindrical portion 42 is positioned lower than the upper end 12a of the negative electrode 12. Accordingly, the corner portion positioned on the outer peripheral side of the groove lower portion 22a can be effectively prevented from being fractured. Preferably, in view of increasing the battery capacity by increasing the volume occupied by the electrode assembly 14 in the exterior can 16, the length of the cylindrical portion 42 in the axial direction is less than or equal to 5 mm. In view of increasing the battery capacity, the lower end 42a of the cylindrical portion 42 may be positioned higher (closer to the sealing assembly 17 in the axial direction) than the upper end (an end on the sealing assembly 17 side in the axial direction) 11a of the positive electrode 11.

Note that the present disclosure is not limited to the aforementioned embodiment and its modified examples, and various improvements and changes can be made in a range of the items described in the claims of the present application and their equivalent range. For example, in the above embodiment, the case where the metal plate 40 includes the cylindrical portion 42 has been described. However, the metal plate may be an annular member that does not include the cylindrical portion. Preferably, in the case where the metal plate is an annular member, the inner end of the metal plate in the radial direction is positioned more outward in the radial direction than the inner end positioned on the innermost periphery of the annular groove, and the outer end of the metal plate in the radial direction is positioned more outward in the radial direction than the outer peripheral end of the electrode assembly.

### REFERENCE SIGNS LIST

10 Cylindrical battery, 11 Positive electrode, 11a Positive electrode upper end, 12 Negative electrode, 12a Negative electrode upper end, 13 Separator, 14 Electrode assembly, 16 Exterior can, 17 Sealing assembly, 18 Upper insulating plate, 19 Lower insulating plate, 20 Positive electrode lead, 21 Negative electrode lead, 22 Grooved portion, 22a Groove lower portion, 22b Inner end, 23 Terminal plate, 24 Lower vent member, 25 Insulating plate, 26 Upper vent member, 27 Sealing plate, 27a Projection, 27b Vent hole, 28 Gasket, 29 Shoulder portion, 31 Bottom portion, 33 Peripheral edge portion, 36 Annular groove, 39 Cylindrical portion, 40 Metal plate, 41 Flat plate portion, 41a Metal plate inner end, 42 Cylindrical portion, 42a Cylindrical portion lower end.

## Claims

1. A cylindrical battery, comprising:
an electrode assembly that includes a positive electrode and a negative electrode that are wound with a separator intervening therebetween;
a bottomed cylindrical exterior can that includes: a cylindrical portion that includes a shoulder portion extending inward in a radial direction at an end portion on one side in an axial direction, and a grooved portion depressed inward in the radial direction over an entire periphery in a circumferential direction; and a bottom portion that blocks an opening on another side in the axial direction at the cylindrical portion, the bottomed cylindrical exterior can accommodating the electrode assembly;
a sealing assembly that blocks an opening portion of the exterior can;
an insulating plate disposed between the grooved portion and the electrode assembly; and
a metal plate of which at least a part intervenes between the grooved portion and the insulating plate.

2. The cylindrical battery according to claim 1, wherein the metal plate includes a cylindrical portion that extends from an outer peripheral edge toward the bottom portion along an inner-peripheral surface of the exterior can.

3. The cylindrical battery according to claim 2, wherein in the axial direction, an end of the cylindrical portion of the metal plate on the bottom portion side is positioned closer to the bottom portion than an end of the negative electrode on the sealing assembly side.
